Europäisches Patentamt

European Patent Office

Office européen des brevets

(11) Publication number: **0 318 256 B1**

(12) **EUROPEAN PATENT SPECIFICATION**

(45) Date of publication of patent specification: **23.12.92**

(51) Int. Cl.⁵: **G01N 21/03**, C12Q 1/68, B01L 3/00

(21) Application number: **88311060.3**

(22) Date of filing: **23.11.88**

(54) **Cuvette with non-flexing thermally conductive wall.**

(30) Priority: **23.11.87 US 123752**
**23.11.87 US 123751**

(43) Date of publication of application:
**31.05.89 Bulletin 89/22**

(45) Publication of the grant of the patent:
**23.12.92 Bulletin 92/52**

(84) Designated Contracting States:
**CH DE FR GB IT LI SE**

(56) References cited:
**EP-A- 0 290 978**
**US-A- 4 595 561**
**US-A- 4 753 531**

(73) Proprietor: **EASTMAN KODAK COMPANY (a New Jersey corporation)**
**343 State Street**
**Rochester New York 14650(US)**

(72) Inventor: **Helfer, Jeffrey Lawrence c/o Eastman Kodak Company**
**Patent Department 343 State Street**
**Rochester New York 14650(US)**
Inventor: **Middleton, David Haynes c/o East-**
man Kodak Company
**Patent Department 343 State Street**
**Rochester New York 14650(US)**
Inventor: **Porte, Johannes Jacobus c/o East-**
man Kodak Company
**Patent Department 343 State Street**
**Rochester New York 14650(US)**
Inventor: **Columbus, Richard Lewis c/o East-**
man Kodak Company
**Patent Department 343 State Street**
**Rochester New York 14650(US)**
Inventor: **Wellman, Jeffrey Allen c/o Eastman Kodak Company**
**Patent Department 343 State Street**
**Rochester New York 14650(US)**

(74) Representative: **Phillips, Margaret Dawn et al Kodak Limited Patent Department Headstone Drive**
**Harrow, Middlesex HA1 4TY(GB)**

## Description

This invention relates to cuvettes in which reactions are undertaken in liquids confined within the cuvette, and particularly those reactions requiring carefully controlled temperatures and a rapid rate of heat transfer to or from the cuvette.

Although this invention is not limited to cuvettes used for nucleic acid amplification, the background is described in the context of the latter.

Nucleic acid amplification generally proceeds via a particular protocol. One useful protocol is that set forth in U.S.Pat. No. 4,683,195. Briefly, that protocol features, in the case of DNA amplification, the following:

1) A complete DNA double helix is optionally chemically excised, using an appropriate restriction enzyme(s), to isolate the region of interest.

2) A solution of the isolated nucleic acid portion (here, DNA) and nucleotides is heated to and maintained at 92° - 95°C for a length of time, e.g., no more than about 10 minutes, to denature the two nucleic acid strands; i.e., cause them to unwind and separate and form a template.

3) The solution is then cooled through a 50° - 60°C zone to cause a primer nucleic acid strand to anneal or "attach" to each of the two template strands. To make sure this happens, the solution is held at an appropriate temperature, such as about 55°C for about 15 seconds, in an "incubation" zone.

4) The solution is then heated to and held at about 70°C, to cause an extension enzyme, preferably a thermostatable enzyme, to extend the primer strand bound to the template strand by using the nucleotides that are present.

5) The completed new pair of strands is heated to 92° - 95°C again, for about 10 - 15 seconds, to cause this pair to separate.

6) Steps 3) - 5) are then repeated, a number of times until the appropriate number of strands are obtained. The more repetitions, the greater the number of multiples of the nucleic acid (here, DNA) that is produced. Preferably the desired concentration of nucleic acid is reached in a minimum amount of time.

A cuvette is usually used to hold the solution while it passes through the aforementioned temperature stages. Depending upon the design given to the cuvette, it can proceed more or less rapidly through the various stages. A key aspect controlling this is the thermal transfer efficiency of the cuvette--that is, its ability to transfer heat more or less instantaneously to or from all of the liquid solution within the cuvette. The disposition and the thermal resistance of the liquid solution itself are usually the major aspects affecting the thermal transfer, since portions of the liquid solution that are relatively far removed from the heat source or sink, will take longer to reach the desired temperature.

The crudest and earliest type of cuvette used in the prior art is a test tube, which has poor thermal transfer efficiency since a) the walls of the cuvette by being glass or plastic, do not transfer thermal energy well, and b) a cylinder of liquid has relatively poor thermal transfer throughout the liquid. That is, not only does the liquid have low thermal conductivity, but also a cylinder of liquid has a low surface to volume ratio, that is, about $10.6 \text{ cm}^{-1}$ ($27 \text{ in}^{-1}$) for a fill of about 100 $\mu l$.

Still another problem in DNA amplification is the manner in which the cuvette allows for ready removal of the liquid after reaction is complete. A test tube configuration readily permits such removal. However, modification of the cuvette to provide better thermal transfer efficiency tends to reduce the liquid transferability. That is, a cuvette having capillary spacing only, permits rapid heating of the contents. However, the capillary spacing resists liquid removal. This problem is exemplified by U.S. Patent No. 4,405,235, which teaches a liquid container one wall of which is a steel "plate". The cavity, however, is described as being 0.15 mm thick, which is a capillary spacing. Still further, if such a container as is described in this patent is used to heat the contents, the steel plate, because it is a plate, tends to heat very slowly, too slowly for the recycling process noted above. If however the plate were reduced to a foil thickness, then it tends to be susceptible to buckling and flexing outwardly, as vapor pressure builds up inside. At best, this flexure interferes with thermal contact with a heating element. At worst, it can cause the metal layer to separate from the cuvette.

Thus, prior to this invention a problem has been to provide a cuvette with rapid thermal cycling and sidewalls that do not flex to interfere with heating.

The above problem is addressed by a cuvette for controlled reaction of components of a liquid involving cycling through temperatures applied by a heater or cooler to the cuvette, the cuvette having at least one liquid-confining chamber defined by two spaced-apart opposing-walls each providing a major surface of liquid contact; side walls connecting the two opposing walls; and means permitting the introduction of liquid into, and the removal of such liquid from, the chamber; one of the opposing walls comprising a thermally conductive material as the sole structural component, the thermally conductive material being exposed to the environment to permit contact with an external heater or cooler; characterized in that the wall opposite to said one thermally conductive wall has a flexural strength that is sufficiently less than that of the thermally conductive structural component, as to cause the opposite one of the walls to flex under internal pressure, in lieu of the thermally conductive structural component.

Thus, it is an advantageous feature of the invention that a cuvette for rapid thermal cycling is provided, featuring a heat transfer wall sufficiently flexible as to flex under internal pressure, wherein means are provided to prevent such flexing.

It is a related advantageous feature of the invention that such a cuvette is provided wherein the wall opposite to the heat transfer wall is deliberately constructed to undergo deformation to relieve internal pressure, before the heat transfer wall becomes deformed.

The present invention will now be described by way of example with reference to the accompanying drawing in which:

Figure 1 is an isometric view of a cuvette with respect to which the present invention is an improvement;

Figure 2 is a vertical section view taken generally along the mid-axis of the cuvette of Figure 1; and

Figure 3 is a section view similar to that of Figure 2, but illustrating the present invention.

The invention is described hereinafter for temperature cycling over a range of at least about 35°C, as is particularly useful in replicating DNA strands. In addition, it is also useful for any kind of reaction of liquid components and reagents that requires repetitive heating and cooling of the cuvette within which the reaction is conducted. It is further useful if the temperature range of cycling is more or less than 35°C.

Orientations such as "up", "down", "above" and "below" are used with respect to the cuvette as it is preferably used.

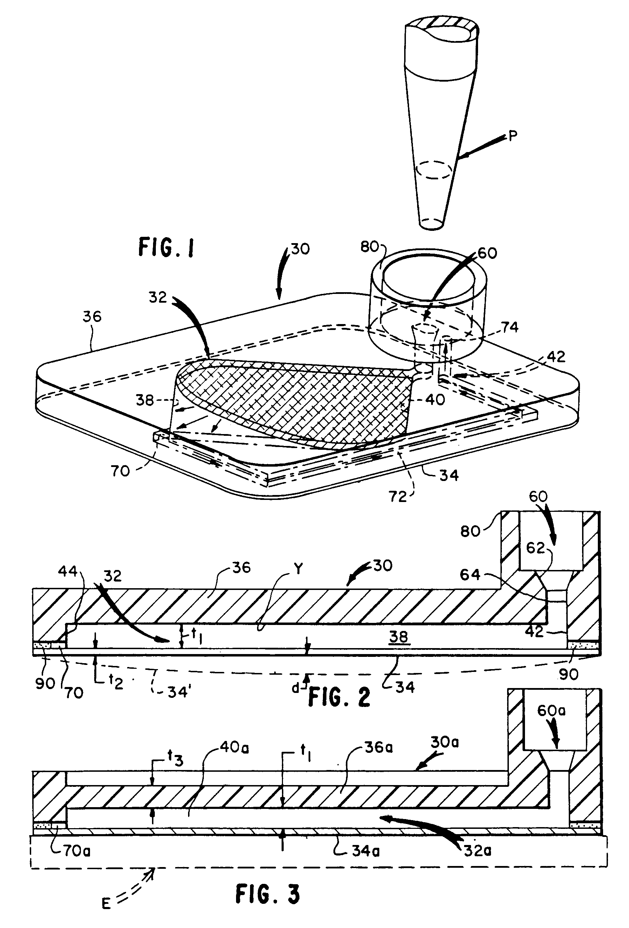

Turning first to Figures 1-2, a cuvette 30 comprises a liquid-confining chamber 32 defined by two opposing walls 34 & 36, Figure 2, spaced apart a distance $t_1$. Such spacing is achieved by side walls 38 and 40, that join at opposite ends 42 and 44 of chamber 32. Most preferably, the shape of side walls 38 and 40 is one of a gradual concavity, so that they diverge at end 42, Figure 1, at an angle of about 90°, and at a point halfway between ends 42 and 44, start to reconverge again at an angle of about 90°. Distance $t_1$, Figure 2, is selected such that such distance, when considered in light of the shape of sidewalls 38 and 40, minimizes the quantity of liquid that is retained in the cuvette upon removal of liquid. More specifically, that distance is selected, given the shape shown for walls 38 and 40, so that the capillary number ($N_{ca}$) and the goucher number ($N_{GO}$), both standard terms known in the fluid management art, are each less than 0.05. When so selected, momentum transfer particularly under a liquid-driven transfer system, results in a majority removal of liquid from chamber 32. Highly preferred values of $t_1$ are between about 0.5 mm and about 2.5 mm.

Walls 34 and 36 provide the major surfaces in contact with the liquid. As such, their surface area is selected such that, when considered in light of the thickness of spacing $t_1$, the surface-to-volume ratio for chamber 32 is optimized for a high rate of thermal energy transfer. A highly preferred example provides an exposed surface area of 2.4 cm$^2$ (0.37 in$^2$) for each of walls 34 and 36, with the surface from the side walls providing a contact area of about 0.36 cm$^2$. Most preferably, therefore, the surface-to-volume ratio is between about 25.6 cm$^{-1}$ (65 in$^{-1}$) and about 51 cm$^{-1}$ (130 in$^{-1}$) for a fill volume of between 200 and 100 $\mu$l, respectively.

Such a large fluid surface-to-volume ratio provides an advantage apart from a rapid thermal energy transfer. It means that, for a given volume, a much larger surface area is provided for coating reagents. This is particularly important for reagents that have to be coated in separate locations on the surface to prevent premature mixing, that is, mixing prior to injection of liquid within the chamber. Also, the large reagent/fluid interface area and short diffusion path provided by the large s/v ratio of the cuvette provides rapid reagent dissolution without requiring external excitation (such as shaking).

Therefore, one or more reagent layers (not shown) can be applied to the interior surface of wall 36, in a form that will allow it to enter into a reaction with liquid sample inserted into chamber 32. As used herein, "layer" includes reagents applied as discrete dots.

A liquid access aperture 60 is formed in wall 36 adjacent end 42, Figure 2. The aperture has an upper portion 62 and a lower portion 64 that connects the upper portion with chamber 32. Preferably at least portion 62 is conical in shape, the slope of which allows a conical pipette P, Figure 1, to mate therewith.

At opposite end 44, an air vent 70 is provided, in a manner similar to that described in U.S. Patent No. 4,426,451. Most preferably, air vent 70 extends into a passageway 72, Figure 1, that is routed back to a point adjacent end 42, where it terminates in opening 74 adjacent access aperture 60.

To allow a single closure device to seal both the access aperture 60 and opening 74 of the air vent, both of these are surrounded by a raised, cylindrical boss 80. Any conventional closure mechanism is useful with boss 80, for example, a stopper. Such stopper can have external threads for engaging mating internal threads, not shown, on the boss, or it can be constructed for a force fit within the boss 80.

The wall 34 opposite to wall 36 is the heat transfer wall, constructed with a predetermined thermal path length and thermal resistance that will provide a high rate of thermal energy transfer. Most preferably, such path length ($t_2$ in Figure 2) is no greater than about 0.3 mm, and the thermal resistance is no greater than about 0.01° C/watt. These properties are readily achieved by constructing wall 34 out of a thermally conductive metal such as aluminum that is about 0.15 mm thick. Such aluminum has a thermal resistance R, calculated as thickness $\chi$•1/(conductivity K•surface area A), which is about 0.003° C/watt. (These values can be contrasted for ordinary glass of the same thickness, which has a thermal resistance of about 0.24° C/watt.)

Wall 34 can be secured to sidewalls 38 and 40 by any suitable means. One such means is a layer 90, Figure 2, which comprises for example a conventional high temperature acrylic adhesive, and a conventional polyester adhesive. Most preferably, layer 90 does not extend over the surface area of wall 34, as such would greatly increase the thermal resistance of wall 34, and possibly interfere with reactions desired within chamber 32.

A cuvette constructed as described above for Figures 1-2, has been found to produce a thermal time constant tau ($\tau$) that is no greater than about 10 seconds. Most preferred are those in which $\tau$ is of the order of 3-8 seconds. When such a cuvette, filled with water, is heated along the exterior of wall 34, and its temperature is measured at point Y, Figure 2, a thermal response curve is generated from 28° C to a final temperature of 103.9° C. The time it takes for the liquid therein to reach a temperature of 76° C (the initial temperature of 28° C plus 63% of the difference (103.9 - 28)) is the value of tau ($\tau$). This derives (approximately) from the well-known thermal response equation:

1) Temperature T (t) = Final Temperature (for time = infinity) + (Initial Temperature - Final Temperature)•$e^{-t/\tau}$

Thus, if the time interval t in question equals tau, then $e^{-t/\tau} = e^{-1} \simeq 0.37$. In such a case, T (t) (at t = tau) is the temperature which is equal to the sum of the initial temperature plus 63% of (Final Temperature - Initial Temperature).

For the above-described cuvette, tau is about 3.5 seconds, for the liquid contained therein.

If the adhesive of layer 90 does extend over all the surface of wall 34, then tau can be increased to as much as 7 or 8 sec.

A problem occasionally occurs with cuvette 30, particularly at the high temperature end of the cycling. Pressure build-up occurs, due to thermal expansion of fluids and air within the cuvette as well as the release of gases dissolved in the liquid and the sealing of opening 60 as described above. In the cuvette of Figure 2, this causes wall 34 to tend to deform outward, as indicated by the phantom line 34'. The outward deformation creates a dome of thickness which prevents cuvette 30 from properly resting on a flat heating element. That is, only a minor portion of surface 34' remains in contact with the heating element. Such dome formation thus reduces the rapid thermal transfer through wall 34 that is desired.

In accord with the present invention, Figure 3, the aforementioned problems are solved by a cuvette in which a part thereof, other than the thermally conductive wall, becomes deformed to partially accommodate the pressure, in order to maintain intimate contact between reaction vessel wall 34 and the incubator. Parts similar to those previously described in Figures 1 and 2 bear the same reference numeral, to which the distinguishing suffix "a" is appended.

Thus, cuvette 30a comprises opposite major walls 34a and 36a defining, with side walls (only wall 40a shown), a chamber 32a having a spacing $t_1$. These and the access aperture 60a and air vent 70a are generally constructed as described above. To insure that wall 34a does not deform under pressure, wall 36a is constructed to have a flexure strength that is less than that of wall 34a. Specifically, this is preferably done as follows: if wall 34a comprises aluminum that is about 0.15 mm thick, then its flexure strength K at the center of flexure is determinable, based on the following:

Deflection X is determined by the well-known equation

(2) $\quad X = \alpha\, Pa^2/Et^3$

where P = total applied load, E = plate modulus of elasticity, t = plate thickness, a = the length of one side of the plate, and $\alpha$ is an emperical coefficient (usually equal to about 0.015). Rearranging,

(3) $\quad P/X = Et^3/\alpha a^2$.

Because P/X is analogous to F/X which equals K (flexure strength), then

(4) $\quad K \simeq Et^3/\alpha a^2$.

This allows K to be calculated to be about 6.11 x $10^4$ N/m (6.11 x $10^6$ dynes/mm). For wall 36a to have a flexure strength less than that, for example a value no greater than about 1 x $10^4$ N/m (1 X $10^6$ dynes/mm), it need only comprise a layer of polyethylene or polypropylene that is about 0.3 mm thick (twice that of the aluminum wall 34a), to have a flexure strength of about 8.3 x $10^3$ N/m (8.3 x $10^5$

dynes/mm), calculated in the same manner. In such a construction, wall 36a will dome upwardly as pressure, such as 0.08 MPa (12 psi), is generated within chamber 32a, leaving wall 34a lying planar against the heating element (shown in phantom as "E").

In use, the cuvette is filled to about 90% of being full, with a liquid containing the desired sample for reaction, for example, a solution of a DNA sequence that is to be amplified. The device is then inserted into an appropriate incubator and cycled through the necessary stages for the reaction.

Any suitable incubator is useful to cycle the cuvettes of this invention through the desired heating and cooling stages. Most preferably, the incubator provides stages that cycle through the temperatures described above. A convenient incubator for doing this preferably is one having the following stations: A preincubate station has heating means that delivers a temperature of 95°C. From there, the cuvette is pushed by conventional pusher means onto a ring of constant temperature stations, the first one of which is maintained at 55°C. From this station the cuvette is shuttled to the next adjacent, or second, station, which heats it to 70°C. This temperature is maintained for a period, and accordingly the third station is also at that temperature. Next, a short-time denaturing station (4th station) is encountered to denature the newly replicated DNA, which station is maintained at 95°C. Stations 5-12 simply repeat twice more the cycles already provided by stations 1 to 4. A moderate number of cycles through the incubator can take place before the cuvette is removed. The number of cycles depends on the concentration in the sample of the DNA sequence target desired to be amplified, and the desired final concentration. After station no. 12, a conventional transfer mechanism moves the cuvette off the ring for further processing. (Both the injection of liquid into the cuvette and the removal of liquid therefrom are done off-line, that is, outside of the incubator.)

## Claims

1. A cuvette (30a) for controlled reaction of components of a liquid involving cycling through temperatures applied by a heater or cooler to the cuvette, the cuvette (30a) having at least one liquid-confining chamber (32a) defined by two spaced-apart opposing walls (34a,36a) each providing a major surface of liquid contact; side walls (38,40) connecting the two opposing walls; and means (60a,70a) permitting the introduction of liquid into, and the removal of such liquid from, the chamber; one of the opposing walls (34a) comprising a thermally conductive material as the sole structural component, the thermally conductive material being exposed to the environment to permit contact with an external heater or cooler;

   characterized in that the wall (36a) opposite to said one thermally conductive wall (34a) has a flexural strength that is sufficiently less than that of said thermally conductive structural component, as to cause said opposite one of said walls (36a) to flex under internal pressure, in lieu of said thermally conductive structural component.

2. A cuvette (30a) as defined in claim 1, wherein said thermally conductive structural component is aluminum; and said wall (36a) opposite to said thermally conductive wall (34a) has a flexural strength that is no greater than about $1 \times 10^4$ N/m ($1 \times 10^6$ dynes/mm).

3. A cuvette (30a) as defined in claim 1, wherein the thermal time constant $\tau$ for a liquid within the cuvette (30a) is no greater than 10 seconds.

## Patentansprüche

1. Küvette (30a) zur Durchführung einer gesteuerten Reaktion von Bestandteilen einer Flüssigkeit, bei der die Küvette mittels einer Heiz- oder Kühlvorrichtung periodisch unterschiedlichen Temperaturen ausgesetzt wird, mit mindestens einer die Flüssigkeit enthaltenden Kammer (32a), die von zwei einander im Abstand gegenüberliegenden Wandungen (34a, 36a) begrenzt wird, von denen jede eine große Berührungsfläche für die Flüssigkeit besitzt, Seitenwandungen (38, 40) , die die beiden einander gegenüberliegenden Wandungen miteinander verbinden, sowie Mitteln (60a, 70a) zum Einführen der Flüssigkeit in die Kammer und zum Entfernen der Flüssigkeit aus der Kammer, wobei eine (34a) der einander gegenüberliegenden Wandungen ausschließlich aus einem thermisch leitfähigen Material besteht, das außen freiliegend mit einer außerhalb der Vorrichtung befindlichen Heiz- oder Kühlvorrichtung in Berührung gebracht werden kann, **dadurch gekennzeichnet,** daß die der thermisch leitfähigen Wandung (34a) gegenüberliegende Wandung (36a) eine Biegefestigkeit besitzt, die so weit unter der des zur Herstellung der Wandung (34a) verwendeten thermisch leitfähigen Materials liegt, daß sich die gegenüberliegende Wandung (36a) und nicht die aus dem thermisch leitfähigen Material bestehende Wandung unter dem in der Küvette herrschenden Druck biegt.

**2.** Küvette (30a) nach Anspruch 1, dadurch gekennzeichnet, daß die thermisch leitfähige Wandung (34a) ais Aluminium besteht und die ihr gegenüberliegende Wandung (36a) eine Biegefestigkeit von nicht mehr als etwa $1 \times 10^4$ N/m besitzt.

**3.** Küvette (30a) nach Anspruch 1, dadurch gekennzeichnet, daß die thermische Zeitkonstante $\tau$ für eine in der Küvette (30a) enthaltene Flüssigkeit 10 Sekunden nicht übersteigt.

**Revendications**

**1.** Cuvette (30a) destinée à une réaction contrôlée de composants d'un liquide faisant intervenir un cycle entre des températures appliquées à la cuvette par un dispositif de chauffage ou de refroidissement, la cuvette (30a) comportant au moins une chambre de confinement de liquide (32a) définie par deux parois opposées (34a, 36a) distantes l'une de l'autre, formant chacune une surface principale de contact avec le liquide, des parois latérales (38,40) reliant les deux parois opposées et des moyens (60a, 70a) permettant l'introduction d'un liquide dans la chambre et le retrait d'un tel liquide de la chambre, l'une (34a) des parois opposées comprenant un matériau conducteur de la chaleur en tant qu'unique composant structural, le matériau conducteur de la chaleur étant exposé à l'environnement pour permettre un contact avec un dispositif de chauffage ou de refroidissement externe, caractérisée en ce que la paroi (36a) opposée à ladite paroi conductrice de la chaleur (34a) a une résistance à la flexion qui est suffisamment inférieure à celle du composant structural conducteur de la chaleur pour amener la paroi opposée (36a) à fléchir sous l'influence de la pression interne à la place dudit composant structural conducteur de la chaleur.

**2.** Cuvette (30a) selon la revendication 1, dans laquelle ledit composant structural conducteur de la chaleur est l'aluminium et ladite paroi (36a) opposée à ladite paroi conductrice de la chaleur (34a) à une résistance à la flexion qui n'est pas supérieure à environ $1 \times 10^4$ N/m ($1 \times 10^6$ dynes/mm).

**3.** Cuvette (30a) selon la revendication 1, dans laquelle l'inertie thermique $\tau$ pour un liquide à l'intérieur de la cuvette (30a) n'est pas supérieure à 10 s.

FIG. 1

FIG. 2

FIG. 3